Europäisches Patentamt

**European Patent Office**

**Office européen des brevets**

(11) Veröffentlichungsnummer: **0 277 330 B1**

(12) **EUROPÄISCHE PATENTSCHRIFT**

(45) Veröffentlichungstag der Patentschrift: **15.05.91**

(51) Int. Cl.⁵: **E04B 9/00, F16B 7/04**

(21) Anmeldenummer: **87118789.4**

(22) Anmeldetag: **18.12.87**

(54) **Montageknoteneinheit.**

(30) Priorität: **30.01.87 CH 324/87**

(43) Veröffentlichungstag der Anmeldung:
**10.08.88 Patentblatt 88/32**

(45) Bekanntmachung des Hinweises auf die
Patenterteilung:
**15.05.91 Patentblatt 91/20**

(84) Benannte Vertragsstaaten:
**DE ES FR GB IT NL**

(56) Entgegenhaltungen:
**BE-A- 627 100      DE-A- 3 115 913**
**DE-U- 7 225 523    DE-U- 8 500 198**
**FR-A- 2 122 006    FR-A- 2 123 249**
**NL-A- 6 803 400    US-A- 3 261 625**
**US-A- 3 429 601**

(73) Patentinhaber: **LUWA AKTIENGESELLSCHAFT**
**Anemonenstrasse 40**
**CH-8047 Zürich(CH)**

(72) Erfinder: **Kundert, Walter**
**Studacker 12**
**CH-8953 Dietikon(CH)**

(74) Vertreter: **Patentanwälte Schaad, Balass &**
**Partner**
**Dufourstrasse 101 Postfach**
**CH-8034 Zürich(CH)**

## Beschreibung

Die Erfindung betrifft eine Montageknoteneinheit nach dem Oberbegriff von Anspruch 1.

Aus dem DE-U-8500198 ist eine aus Montageknoteneinheiten dieser Art gebildete Reinraumgitterwerkdecke bekannt. Dabei sind die Eingriffsmittel am Knotenstück als rechteckförmige Zentriernasen ausgebildet, die unmittelbar in den Profilabschnitt, der an die entsprechende Anschlussfläche stösst, formschlüssig eingreifen. Dieser formschlüssige Eingriff zwischen einem Knotenstück und den an dieses angeschlossenen Profilabschnitten macht in einer aus solchen Knoteneinheiten gebildeten Gitterwerkdecke den nachträglichen Ausbau bzw. Einbau einzelner Elemente praktisch unmöglich. Von der Art des Eingriffes abgesehen ist die Art der Abdichtung zwischen den Schnittflächen des Profilabschnittes und den Anschlussflächen der Montageknoten für einen nachträglichen zerstörungsfreien Ausbau der Profilabschnitte oder Knotenstücke nicht geeignet; die entsprechenden Flächen werden vor dem Zusammenbau mit einem aushärtenden flüssigen Dichtmittel bestrichen. Ein weiterer wesentlicher Nachteil dieser Dichtungsart ist jedoch, dass die Schnittflächen eine ausreichende Oberflächengüte haben müssen und deshalb relativ hohe Ansprüche an die Bearbeitungweise derselben stellen.

Aufgabe der Erfindung ist es, eine Montageknoteneinheit hoher Stabilität und einfacher Herstellung zu schaffen, die trotz einer zwangsweisen Ausrichtung bei der Montage der Profilabschnitte relativ zum Knotenstück den zerstörungfreien Ausbau derselben quer zur Ebene des Gitterwerkes gestattet.

Die Lösung dieser Aufgabe gelingt mit den Merkmalen des Kennzeichens von Anspruch 1.

Dabei ergibt sich bei der Montage neben der zwangsweisen Ausrichtung der Profilabschnitte eine zwangsweise Abdichtung zwischen den Anschlussflächen und den Schnittflächen, bei welcher die erforderliche minimale Oberflächengüte eine Bearbeitung mit einfachen Mitteln zulässt.

Da die Eingriffsmittel, als Rippen ausgebildet, einer offenen Seite des Profilabschnittes zugekehrt verlaufen, ist ein Profilabschnitt eines zusammengebauten Gitterwerkes nach Ausfahren der gelösten Verbindungsmittel in die entsprechende Profilkammer ohne weiteres quer zu dessen Ebene ausbaubar. Da die Ausbaubewegung des Profilabschnittes in der Erstreckungsrichtung der Führungsrippen erfolgen kann, müssen im Gitterwerk selbst ebenfalls keine Deformationen erzwungen werden, um den Profilabschnitt durch diese Rippen freizugeben. Die gewählten Dichtungsmittel bieten weder für den Ausbau noch für den Wiedereinbau des Profilabschnittes unter Wiederherstellung einer dichten Verbindung Schwierigkeiten.

Es sei darauf hingewiesen, dass aus der BE-A 627100 eine Trägerkonstruktion bekannt ist, bei welcher in die im Querschnitt U-förmigen Profilabschnitte die mit Armen versehenen Knotenstücke unmittelbar eingreifen. Hier sind allerdings keine Dichtmittel vorgesehen.

Ein besonderer Vorteil der Montageknoteneinheit nach der Erfindung liegt in der Möglichkeit, die Montageunter- und -oberteile im Strangguss herzustellen, wobei die einzelnen Oberteile vom Strangerzeugnis abgeschnitten werden können, während die bekannten Montagekreuze gewöhnlich als Druckgusselemente mit erheblichen Werkzeugkosten, insbesondere wegen mehrerer erforderlicher Schieber, hergestellt werden müssen.

Dabei ist es besonders vorteilhaft, dass Knotenoberteile verschiedener Höhe erzeugt werden können, die somit unterschiedlichen Profilen verschiedener Höhe ohne besondere Schwierigkeiten angepasst werden können. Auch kann ein und derselbe Montageknoten nach der Erfindung ohne weiteres mit Profilen verschiedener Querschnittkonfiguration verbunden werden, solange die Profile gewisse Bedingungen betreffs ihrer Aussendimensionen erfüllen und einen passenden Raum für die Einführung des erfindungsgemässen Verbindungsorgans aufweisen.

Der Zusammenbau der aus Profilen und Montageknoteneinheiten nach der Erfindung zu erstellenden Trägerkonstruktion kann an Ort und Stelle im gewünschten Raum erfolgen. Wichtig ist dabei, dass der gesamte Zusammenbau der Trägerkonstruktion von oben, d.h. von der der Raumdecke zugekehrten Seite her erfolgen kann, so dass keine Notwendigkeit besteht, die fertig zusammengebaute Konstruktion umzudrehen, bevor sie mittels eines Lifters bis zum gewünschten Abstand von der Decke des Raumes angehoben und an letzterer in üblicher Weise aufgehängt wird.

Das zur Verbindung mit einer Anschlußfläche des erfindungsgemäßen Montageknotens bestimmte Ende eines Profils kann in üblicher Weise, bevorzugt unter einem rechten Winkel, z.B. vorzugsweise mittels einer Kreissäge abgeschnitten werden, und die Schnittfläche bedarf dann keiner weiteren Bearbeitung, wie dies bei bekannten Konstruktionen meist unvermeidlich gefordert wird.

Es ist daher leicht, eine völlig plane Deckenkonstruktion auf einfache Art und Weise mit Hilfe der an nicht besonders bearbeitete Profilschnittflächen dicht anschließbaren, billig anzufertigenden Montageknoteneinheit nach der Erfindung als Gitterwerk zusammenzubauen.

Weitere Merkmale, Ziele und Vorteile der profilverbindenden Montageknoteneinheit nach der Erfindung ergeben sich aus der folgenden Beschreibung einiger Ausführungsformen derselben im Zusammenhang mit den beigefügten Zeichnungen, in denen

Fig. 1 eine Draufsicht auf eine bevorzugte Ausführungsform eines mehrteiligen Montageknotens nach der Erfindung;

Fig. 2 eine Seitenansicht der Ausführungsform nach Fig. 1, mit der rechten Hälfte derselben im Axialschnitt in einer durch II-II in Fig. 1 angedeuteten Ebene;

Fig. 3 eine Draufsicht auf das Unterteil des mehrteiligen Montageknotens nach Fig. 1;

Fig. 4 eine Seitenansicht des Knotenunterteils des Montageknotens nach Figuren 1 bis 3, teilweise im Axialschnitt in einer durch IV-IV in Fig. 3 angedeuteten Ebene;

Fig. 5 eine teilweise Axialschnittansicht einer etwas abgeänderten Ausführungsform des Knotenunterteils, mit geschlossenem Boden, ähnlich der in Fig. 4 gezeigten;

Fig. 6 ein Dichtungsformteil in Draufsicht und teilweise im Querschnitt, das zum Aufpressen auf das Knotenunterteil dient;

Fig. 7 einen Axialschnitt durch das Dichtungsformteil in einer durch VII-VII in Fig. 6 angedeuteten Ebene;

Fig. 8 eine Draufsicht auf das profilverbindende Oberteil, den eigentlichen Knoten der Montageknoteneinheit nach Fig. 1;

Fig. 8A eine Detailansicht im vergrößerten Maßstab einer der Aufsetzöffnungen des Oberteils nach Fig. 8;

Fig. 9 eine Seitenansicht des Oberteils nach Fig. 8 mit der einen Hälfte im Axialschnitt längs einer in Fig. 8 durch IX-IX angedeuteten Ebene;

Fig. 10 eine Seitenansicht, teilweise im Schnitt, einer der Spannvorrichtungen der Montageknoteneinheit in der Ausführungsform nach Figuren 1 bis 9, teilweise im Längsschnitt;

Fig. 11 eine Ansicht im Längsschnitt des Kippsteins in der Spannvorrichtung nach Fig. 10 und

Fig. 12 eine Vorderansicht des Kippsteins nach Fig. 11 in Richtung des Pfeiles XII in der letzteren Figur gesehen;

Fig. 13 eine Seitenansicht der in der Spannvorrichtung nach Fig. 10 gezeigten Blattfeder;

Fig. 14 eine Vorderansicht der in Fig. 13 gezeigten, in Richtung des Pfeiles XIV erblickten Blattfeder; und

Fig. 15 eine Ansicht von unten der in Fig. 13 gezeigten und in Richtung des Pfeiles XV erblickten Blattfeder;

Fig. 16 eine Draufsicht auf eine zweite Ausführungsform der Montageknoteneinheit nach der Erfindung;

Fig. 17 ein Axialschnitt durch die zweite Ausführungsform in einer in Fig. 16 durch XVII-XVII angedeuteten Ebene;

Fig. 18 eine Draufsicht auf eine dritte Ausführungsform der Montageknoteneinheit nach der Erfindung; und

Fig. 19 ein Axialschnitt durch die dritte Ausführungsform in einer in Fig. 18 durch XIX-XIX angedeuteten Ebene;

Fig. 20 eine Querschnittansicht in einer in Fig. 21, (s. unten) durch XX-XX angedeuteten Ebene, eines ersten an die Montageknoteneinheit nach der Erfindung anschließbares Profils einer Trägerkonstruktion;

Fig. 21 eine schematische Darstellung einer aus Profilen nach Fig. 20, die mittels Montageknoteneinheiten in der in Figuren 1 bis 15 gezeigten Ausführungsform miteinander verbunden sind, zusammengesetzten Trägerkonstruktion;

Fig. 22 eine Querschnittansicht in einer in Fig. 24 durch XXII-XXII angedeuteten Ebene, durch ein zweites an die Montageknoteneinheit nach der Erfindung anschließbares Profil und

Fig. 23 eine Querschnittansicht durch ein drittes an die Montageknoteneinheit nach der Erfindung anschließbares Profil;

Fig. 24 eine schematische Darstellung einer weiteren aus Profilen nach Fig. 22, die mittels Montageknoteneinheiten in der gleichen Ausführungsform miteinander verbunden sind, zusammengesetzten Trägerkonstruktion;

Fig. 25 eine Draufsicht auf eine in Figur 24 perspektivisch dargestellte Eckdichtung;

Fig. 25A ein Detail der Eckdichtung nach Fig. 25 in vergrößertem Maßstab;

Fig. 26 ein Längsschnitt durch die Eckdichtung längs einer in Fig. 25 durch XXVI-XXVI angedeuteten Ebene;

Fig. 27 ein Längsschnitt durch die Eckdichtung in einer anderen, in Fig. 25 durch XXVII-XXVII angedeuteten Ebene;

Fig. 28 eine Teilansicht der Eckdichtung im Längsschnitt längs einer in Fig. 25 durch XXVIII-XXVIII angedeuteten Ebene;

Fig. 29 eine Draufsicht auf den Montageknoten nach Fig. 1 mit an ihn angeschlossenen Bereichen zweier Profile sowie einer Eckdichtung; und

Fig. 30 eine Seitenansicht, teilweise im Axialschnitt, einer weiteren, bevorzugten Ausführungsform eines Verbindungsorgans in der Montageknoteneinheit nach der Erfindung.

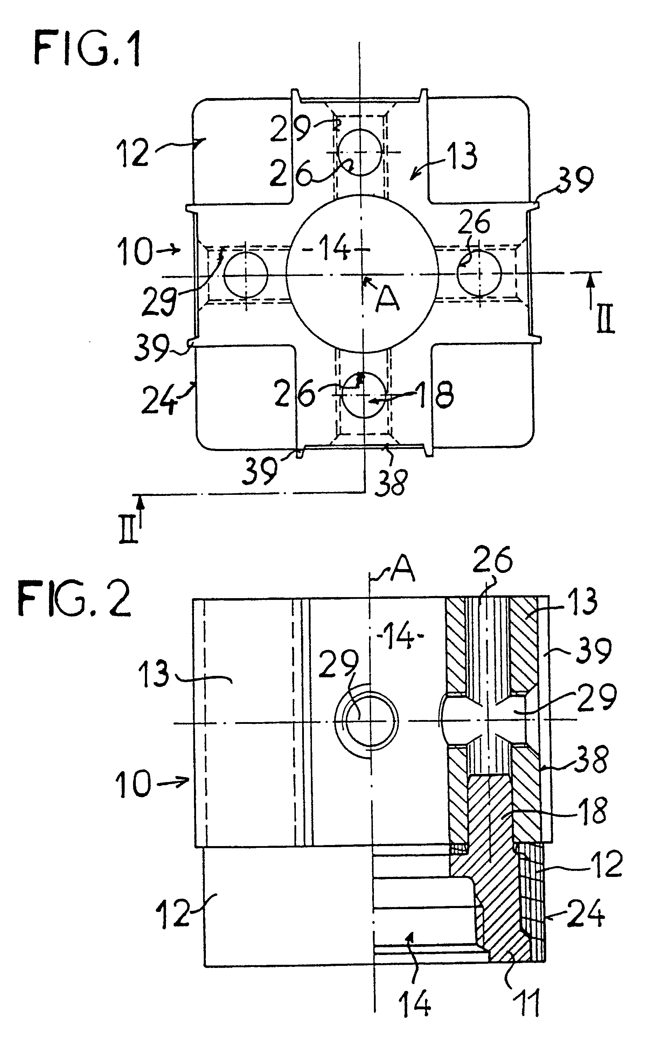

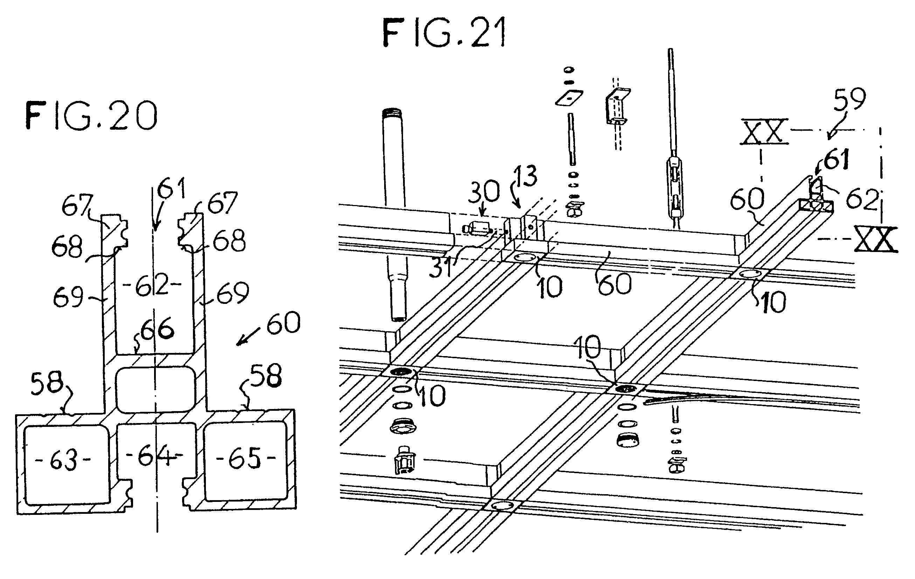

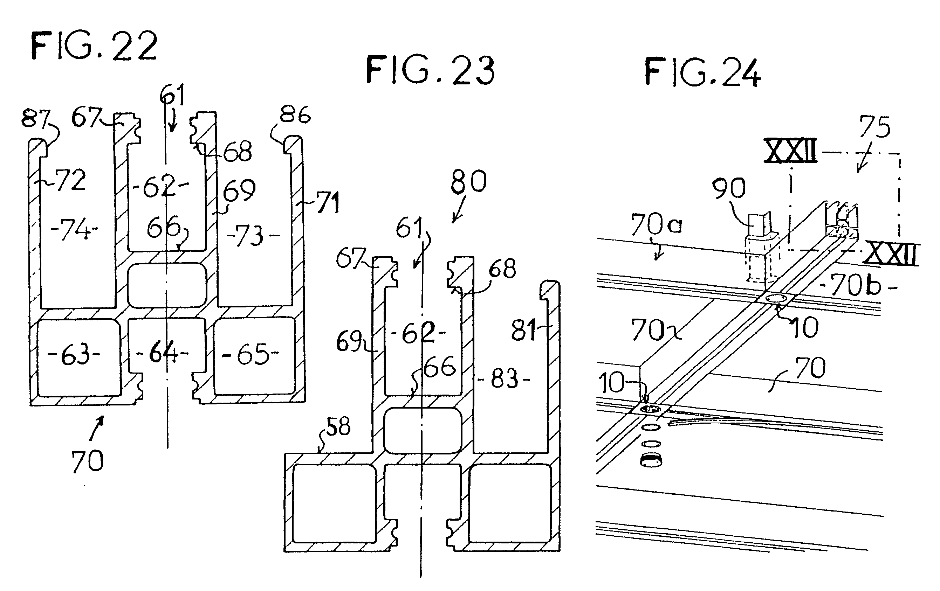

Der in den Figuren 1 bis 9 dargestellte Montageknoten 10 (Figuren 21 und 24), der das Kernstück der Montageknoteneinheit nach der Erfindung darstellt, umfaßt ein Knotenunterteil 11, ein Dichtungsformteil 12 und ein Knotenstück oder -oberteil 13.

Gewöhnlich ist der Montageknoten 10 mit einer verhältnismäßig weiten mittigen Bohrung oder einem eingeformten Durchlaß 14 versehen, der Unterteil, Dichtungsteil und Oberteil in Richtung der mittigen Knotenlängsachse A durchsetzt.

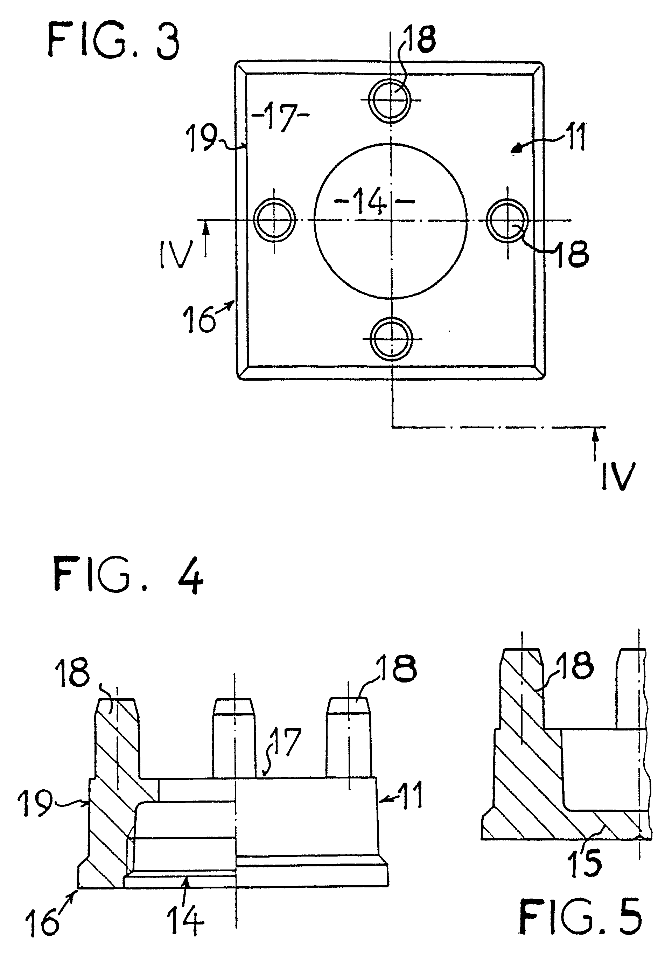

Das in den Figuren 3 und 4 dargestellte Knotenunterteil 11 weist einen quadratischen Grundriß mit dem Umfangsrand 16 auf, aus dessen flacher Oberseite 17 vier Zapfen 18 aufwärts herausragen. Die in Fig. 5 gezeigte Ausführungsform des Unterteils 11 besitzt keinen mittigen Durchlaß, sondern einen geschlossenen Boden 15.

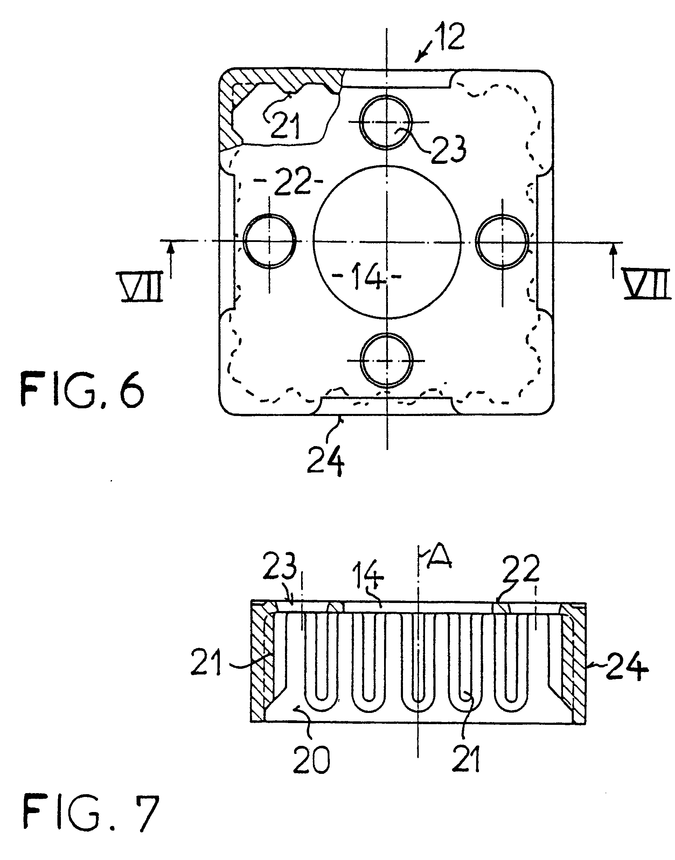

Die Umfassungsseitenwand 19 des Knotenunterteils 11 ist vorzugsweise leicht konisch nach oben zu verjüngt, wobei die Abweichung von der Lotrechten z.B. nur 1° zu betragen braucht. Dies erleichtert das Aufbringen des in Figuren 6 und 7 gezeigten Dichtungsformteils 12.

Dieses Dichtungsformteil 12 ist ebenfalls von quadratischem Grundriß und so dimensioniert, daß die auf seiner Seiteninnenwandung 20 angeformten axial verlaufenden Längsrippen 21 auf die Umfangsseitenwandung 19 bis zum Aufsitzen auf den Rand 16 des Unterteils 11 aufgepreßt werden können. In seiner oberen Endwand 22, mit der das Dichtungsformteil 12 auf der Oberseite 17 des Unterteils 11 aufliegt, sind Löcher 23 vorgesehen, durch die die Zapfen 18 nach oben herausstehen.

Das Dichtungsformteil 12 ist aus Neopren (R) oder einem anderen, nicht geschäumten, kompakten elastischem Dichtungsmaterial mit dem Neopren entsprechenden Eigenschaften (z.B. Shore Härte 60) hergestellt.

Bei Dichtungsdruck eines Formteils von außen z.B. auf die Seitenaußenwandung 24 des Dichtungsformteils 12 kann das Material desselben leicht in die zwischen den Längsrippen 21 vorhandenen Hohlräume zur Unterteilseitenwandung 19 hin ausweichen.

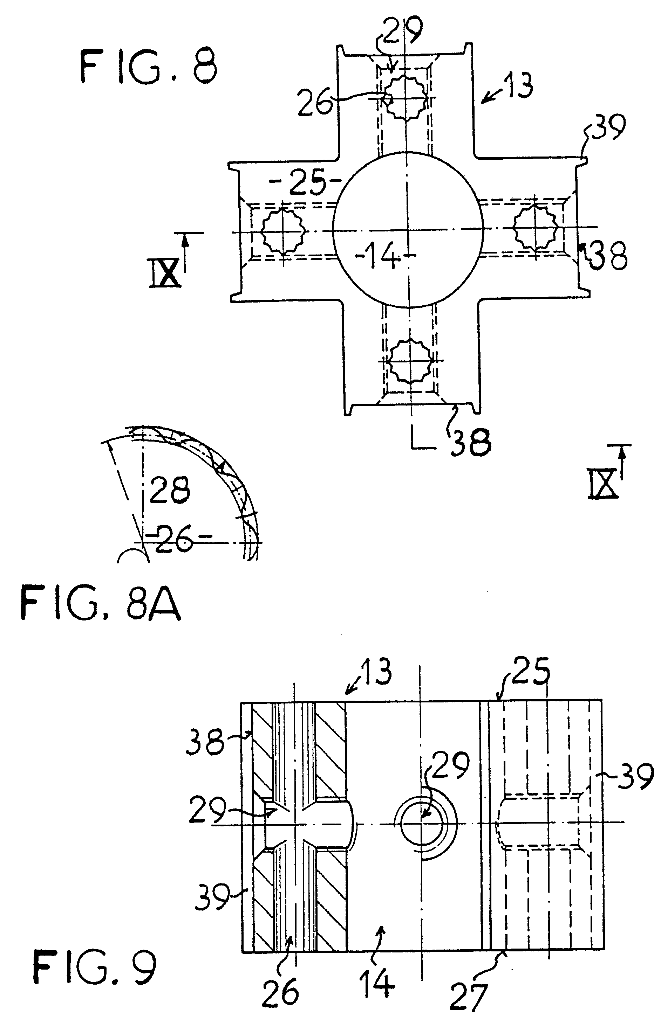

Auf das Dichtungsformteil 12 wird nun das Knotenoberteil oder "Knotenstück" 13 aufgesetzt, das in Figuren 8, 8A und 9 dargestellt ist. Das Oberteil 13 stellt in Draufsicht ein gleicharmiges Kreuz dar (Fig. 8).

Auf seiner oberen Stirnfläche 25 sind die Öffnung des großen mittigen Durchlasses 14 und noch die Öffnungen von vier durchgehenden Löchern oder Bohrungen 26 vorhanden, die beim Strangpressen des Oberteils 13 mitgeformt werden. In diese Löcher passen von der Unterseite 27 des Oberteils 13 her die aus der oberen Dichtungsendwand 22 herausragenden Zapfen 18 des Unterteils 11. Diese Zapfen können mit einer axialen Rillung 28 versehen sein (Fig. 8A), so daß sie das Oberteil 13 dicht und fest mit dem Unterteil 11 verbinden. Natürlich kann die Rillung 28 auch statt auf der Außenwandung der Zapfen 18 in der Innenwandung der Löcher 26 vorgesehen sein.

Beim Aufpressen des Oberteils 13 auf die Zapfen 18 kann infolge der Rillung 28 der Wände der die Zapfen aufnehmenden Löcher 26 unter Umständen eine geringfügige Menge an kleinen Spänen entstehen, die beim Verbleib zwischen Zapfen und Lochwandung eine Schiefstellung von Ober- und Unterteil bewirken könnte. Dank der Rillung 28 können diese Spänchen aber in die Rillen zwischen die Rippen der Rillung 28 ausweichen, wo sie nicht stören.

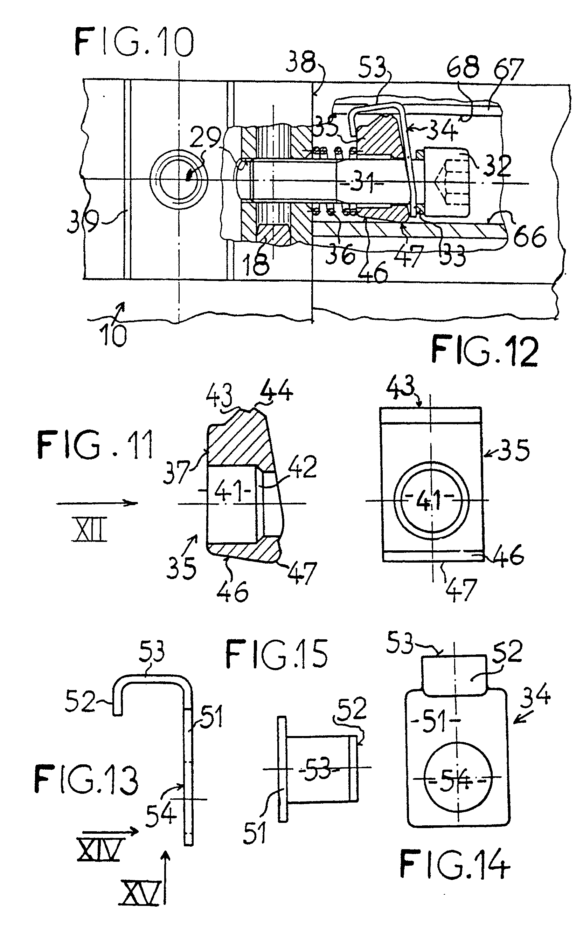

Schließlich weist das Oberteil 13 in jedem seiner vier Arme eine mit Innengewinde versehene Querbohrung 29 zur Aufnahme des mit Außengewinde versehenen Endes des Verstellbolzens 31 (Fig. 10) auf, die in der seitlichen Stirnfläche 38 des betreffenden Armes mündet.

Auf jeder der Stirnflächen 38 seiner Kreuzarme trägt der Montageknoten 10 noch zwei senkrecht verlaufende Führungsleisten 39 im Abstand, die eine rechts und die andere links, von der Öffnung der Querbohrung 29. Die Funktion dieser Führungsleisten wird weiter unten erläutert.

Jeder der vier Verstellbolzen 31 ist ein Glied des in den Figuren 10 bis 15 dargestellten Verbindungsorgans 30, von welchem jeweils eines in jeden der vier Arme des Montageknotenoberteils 13 eingeschraubt wird.

Der Verstellbolzen 31 trägt an seinem dem mit Außengewinde versehenen entgegengesetzten Ende einen Innensechskant-Kopf 32 mit Unterlegscheibe 33, der mit einem Innensechskant-Kugelkopfschlüssel verstellt werden kann. Zugang für den Schlüssel bietet die Längsöffnung 61 des Profils 60. Auf dem Verstellbolzen 31 sitzen, vom Sechskantkopf 32 des letzteren gerechnet hintereinander, eine Kippfeder 34, ein Kippstein 35 und eine Druckfeder 36, die sich, den Kippstein 35 in seine neutrale Stellung belastend, auf der dem Montageknoten 10 zugewandten Seite 37 des Kippsteins 35 einerseits und auf der die Querbohrung 29 umgebenden seitlichen Stirnfläche 38 des betreffenden Armes des Montageknotens 10 abstützt.

Der in Figuren 11 und 12 für sich gezeigte Kippstein 35 besitzt eine weite Querbohrung 41, durch welche der Verstellbolzen 31 geführt werden kann, und die eine Verengung 42 besitzt, um den Verstellbolzen besser zu führen. Doch muß auch diese Verengung noch weit genug sein, um ein leichtes Kippen des Kippsteines in eine Klemmstellung, die in Fig. 10 angedeutet ist, zu gestatten. An seinem oberen Ende trägt der Kippstein 35 zwei quer zur Achse des Stellbolzens verlaufende Rippen 43 und 44, und von seiner dem Montageknoten 10 zuzukehrenden Seite 37 läuft seine Bodenfläche 46 schräg abwärts bis zum abgerundeten, vom Montageknoten 10 abgewandten Ende 47, mit welchem der Kippstein 35 sowohl in seiner neutralen als auch, allerdings geringfügig mit seinem oberen Ende vom Montageknoten 10 weg gekippt und daher etwas weiter in den Abrundungsbereich 47 verlagert, in seiner Klemmstellung auf dem Boden 66 der nach oben offenen Kammer 62 des Profils 60 aufliegt, wie weiter unten unter Bezugnahme auf Figuren 20 bis 24 noch beschrieben wird.

Die in Figuren 13 bis 15 gezeigte Kippfeder 34 ist eine Blattfeder von U-artig gekrümmtem Längsschnitt, die einen längeren Arm 51 und einen kürzeren Arm 52 aufweist, die durch ein Federkopfteil 53 miteinander verbunden sind. Im längeren U-arm 51 befindet sich eine Öffnung 54, durch welche der Verstellbolzen 31 gesteckt wird, wie dies in Fig. 10 gezeigt ist.

Die Funktion des Verbindungsorgans 30 mit den Teilen 31, 34, 35 und 36 wird weiter unten unter Bezugnahme auf Fig. 20 erläutert werden.

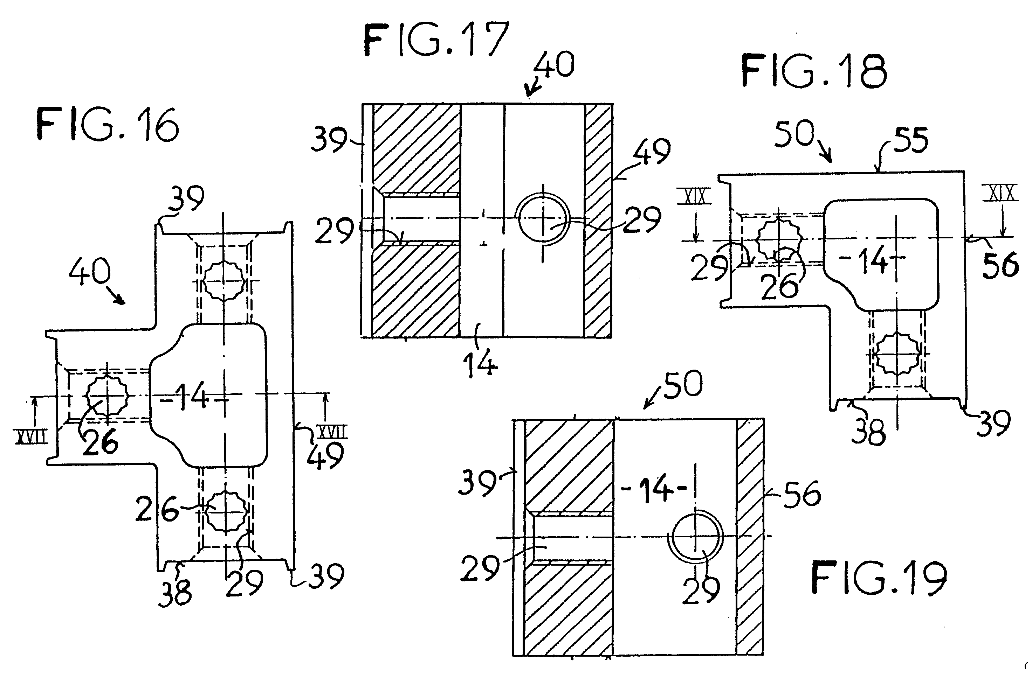

Vorher sollen noch zwei Varianten des Montageknotens kurz beschrieben werden und zwar die in Figuren 16 und 17 gezeigte, für den Anschluß von drei Profilenden geeignete Ausführungsform des Montageknotens 40, und die in Figuren 18 und 19 gezeigte, für den Anschluß von zwei zu einander im rechten Winkel stehenden Profilenden geeignete Ausführungsform des Montageknotens 50. Im Gegensatz zum Montageknoten 10 in der in Figuren 1 bis 9 gezeigten Ausführungsform mit vier Anschlußstellen kann der Montageknoten 40 mit drei Anschlüssen am Rande eines Trägerdeckenrahmens und der Montageknoten 50 nur an den Ecken einer solchen Konstruktion verwendet werden. Gleiche Teile gleicher Funktion wie in Figuren 1 bis 9 tragen auch in den Figuren 16 bis 19 die gleichen Bezugszeichen. Auf seiner einen Seite 49 besitzt daher der Montageknoten 40 keinen Arm und keine der übrigen Merkmale; diesem entsprechend besitzt der Montageknoten 50 auf seinen an einander anstoßenden Seiten 55 und 56 keine Arme oder diesen zugehörigen Merkmale.

In den Figuren 20, 22 und 23 sind die Schnittflächen von drei verschiedenen Profilen gezeigt, in Fig. 21 ein Trägergitterwerk aus Profilen nach Fig. 20 und Montageknoteneinheiten nach Figuren 1 bis 15, während in Fig. 24 ein Trägergitterwerk aus Profilen nach Figuren 22 und 23 und den gleichen Montageknoteneinheiten wie in Fig. 21 dargestellt ist.

Das Profil 60 nach Fig. 20 ist an sich bekannt. Es weist eine oben offene Längskammer 62 mit Längsöffnung 61 und darunter drei Kammern 63, 64 und 65 auf, von denen die in der Mitte unterhalb der Kammer 62 gelegene Kammer 64 nach unten offen ist. Wichtig bei der Befestigung und dem Lösen des Verbindungsorgans 30 beim Anschluß des Montageknotens 10 an das Profil 60 ist vor allem die obere Kammer 62 und die an ihrem oberem Ende befindliche Längsöffnung 61 von kleinerer lichter Weite als die Kammer 62 selber. Die Kammer 62 hat einen Boden 66 und am oberen Ende dank der geringeren Breite der Längsöffnung 61 zu beiden Seiten der letzteren Längsrippen 67, deren Unterseiten 68 schulterartig in den oberen Teil der Kammer 62 hinein vorspringen.

Das Verbindungsorgan 30 wird nun so in die Kammer 62 des Profils 60 von dessen Schnittfläche her eingeführt, daß der Kippstein 35 etwas nach hinten gekippt, d.h. mit seinem oberen Ende zum Montageknoten 10 geneigt, mit seinem runden Ende 47 auf dem Kammerboden 66 des Profils aufliegt und daß seine eine Querrippe 43 an den Unterseiten 68 der beiden Längsrippen 67 im oberen Teil der Profilkammer 62 anliegt (Fig. 10).

Die Kippfeder 34 ist so gestaltet, daß ihr oberes Ende mit dem Kopfteil 53, dem kurzen U-arm 52 und einem gleich langen, an den Kopfteil 53 anschließenden Stück des längeren U-armes 51, schmäler ist als der übrige, untere Teil des U-armes 51, so daß die Kippfeder mit ihrem schmäleren Bereich an den Längsrippen 67 vorbei in die von diesen begrenzte Längsöffnung 61 hineinragen kann.

Wird nun der Verstellschraubbolzen 31 durch Drehen des Kopfes 32 mittels eines durch die Längsöffnung 61 in die Kammer 62 eingeführten Schlüssels weiter in den Montageknoten 10 hineingeschraubt, so wird der Kippstein 35, wie oben unter Bezug auf Fig. 10 beschrieben, aus seiner neutralen Stellung, in der er auf dem Boden 66 der oberen Profilkammer 62 nur aufliegt und an den Unterseiten 68 der Längsrippen 67 nur lose anliegt, in seine Klemmstellung gedrückt, in der er sowohl gegen den Boden 66 als auch gegen die Rippenunterseiten 68 kraftschlüssig klemmt.

Das Hinein- oder Herausschrauben des Bolzens 31 in oder aus dem Montageknoten bedingt ein Verstellen seiner Position im Profil, der Begriff "verstellbar" trifft daher auf ihn zu.

Das Anziehen, d.h. tiefere Hineinschrauben des Verstellbolzens 31 in den Montageblock 10 bewirkt nun eine verstärkte Dichtung zwischen letzterem und dem Profil 60, da die Schnittfläche 59 des Profils 60 (Fig. 21) an die betreffende Anschlußseite 38 des Montageknotens 10 angedrückt wird. Hierbei dringen die Anschlagleisten 39 in das Profil neben der oberen Profilkammer 62 (Fig. 21), d.h. rechts und links derselben, oder in die Seitenkammern 73,74 (Fig. 22) bzw. 83 (Fig. 23) ein, aber stets an den Außenseiten der Kammerseitenwände 69 geführt, bis die Profilschnittfläche 59 mit der Stirnwand 38 des betreffenden Armes des Montageknotens 10 Metall-auf-Metall anliegt. Diese kraftschlüssige Verbindung von Metall auf Metall ergibt die Stabilität der Gitterwerkkonstruktion.

Hierdurch wird die entsprechende Seitenfläche 24 des Dichtungsformteils 12 geringfügig zusammengedrückt, da sie ein wenig über die Armstirnwand 38 hinausragt (Figuren 1 und 2). Sie kann aber dank des Anlaufens Metall-auf-Metall der Flächen 38 und 59 nicht übermäßig stark beansprucht werden, sondern nur ein wenig einfedern (z.B. um 0,3 bis 0,5 mm).

Ein Herausnehmen des Profils 60 aus einem fertigen Gitterwerk geschieht höchst einfach, indem mit einem durch die Längsöffnung 61 eingeführten Schlüssel der Verstellbolzen 31 aus dem Montageknoten 10 völlig herausgeschraubt wird. Das Profil 60 kann dann leicht mit den sämtlichen lose darin liegenden Teilen des herausgeschraubten Verbindungsorgans 30 nach unten aus dem Gitterwerk entfernt werden.

Beim Wiedereinsetzen muß allerdings der Kopf 32 des Schraubbolzens 31 gut im aus der Längsöffnung 61 herausragenden Schlüssel gehalten werden, während sein freies Ende in die Höhe der Querbohrung 29 im Montageknotenoberteil 13 angehoben und dann in dieser teilweise eingeschraubt werden muß.

In das aus den Profilen 60 zusammengebaute Gitterwerk nach Fig. 21 können Filter mit ihren Rahmen in bekannter Weise eingesetzt werden, wobei die üblichen Dichtungsrahmen (nicht gezeigt), z.B. aus Neopren (R) oder dergleichen bekanntem Dichtungsmaterial auf die durch die Kammern 63 und 64 gebildeten Schultern 58 aufgelegt und auf diese die Filterrahmen (nicht gezeigt) aufgesetzt werden, wie dies z.B. in Bild 21 und 32 auf Seiten 14 und 18 der Veröffentlichung "Reinraumtechnik Grundlagen und Anwendung" der LUWA AG, 8047 Zürich, Schweiz (1986) gezeigt ist.

Die in Figuren 22 und 23 schematisch durch ihre Schnittflächen dargestellten Profile 70 und 80 dienen der Konstruktion eines in Fig. 24 perspektivisch gezeigten Trägergitterwerks, in welchem der Zusammenbau mit den gleichen Montageknoten 10, 40 und 50 erfolgt, wie im Falle des Gitterwerks nach Fig. 21.

Das Profil 70 wird dabei im Innern des Gitterwerks, das Profil 80 an dessen Rand verwendet. Diejenigen Teile der Profile 70 und 80, die mit denjenigen des Profils 60 (Fig. 20) identisch sind, tragen die gleichen Bezugszeichen wie in Fig. 20.

Hingegen besitzt das Profil 70 rechts und links der mittleren oberen Kammer 62 zwei mit dieser parallel verlaufende, durch Außenwände 71 bzw. 72 gebildete Seitenkammern 73 und 74. Entsprechend weist das Profil 80 eine durch eine Außenwand 81 gebildete, zur mittleren oberen Kammer 62 parallel verlaufende Seitenkammer 83 auf.

In die Seitenkammern 73, 74 bzw. 83 wird zur Schaffung einer Flüssigkeitsdichtung (Fluid Seal) eine hochviskose Flüssigkeit, z.B. eine Vaseline, die bis knapp über den Schmelzpunkt erhitzt ist, eingegeben, und in diese dann die Fußleisten der Filterkastenrahmen (nicht gezeigt) eingesetzt.

Wie dies geschieht, ist in Fig. 10 des DE-U-85 00 198 schematisch dargestellt.

Die Schnittfläche 75 des Profils 70, die an einen Montageknoten 10 nach der Erfindung angelenkt werden kann, ist in der perspektivischen Darstellung einer derart aufgebauten Trägerkonstruktion nach Fig. 24 gezeigt.

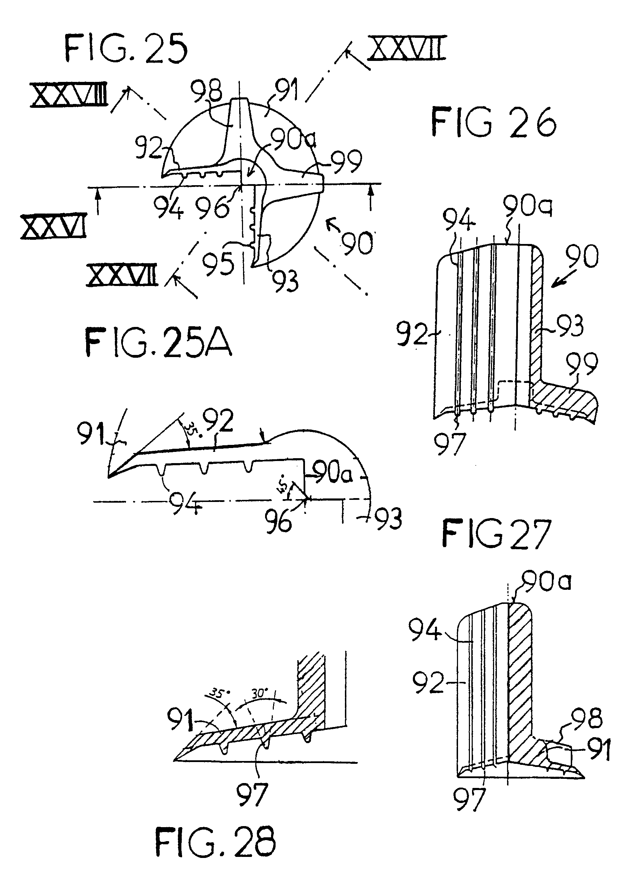

Der Zusammenbau der Profile 70 und 80 mit einem Montageknoten 10 erfolgt in derselben Weise mittels Verbindungsorganen 30, wie dies weiter oben für das Profil 60 beschrieben wurde. Bei dem dadurch erhaltenen Gitterwerk nach Fig. 24 sind an jeder der vier Anschlußseiten Verbindungsfugen 85 zwischen den Außenwänden 72a und 71b der Profile 70a und 70b vorhanden, die durch eine besondere Eckdichtung 90 aus Neopren (R) oder einem anderen Dichtungsmaterial mit ähnlichen Eigenschaften, die in Figuren 25 bis 28 dargestellt ist, abgedichtet sind. Diese Eckdichtung trägt auf einem Fußteil 91, das einen Winkel von 270° überdeckt, zwei im rechten Winkel zusammenstoßende senkrechte Wandteile 92 und 93, die an der Innenseite Längsrippen 94 bzw. 95 rechts und links einer Mittelrippe 96 tragen. Auch der Fußteil 91 trägt an seiner Unterseite Ringrippen 97 und an seiner Oberseite Anschlag- und Verstärkungsrippen 98 und 99.

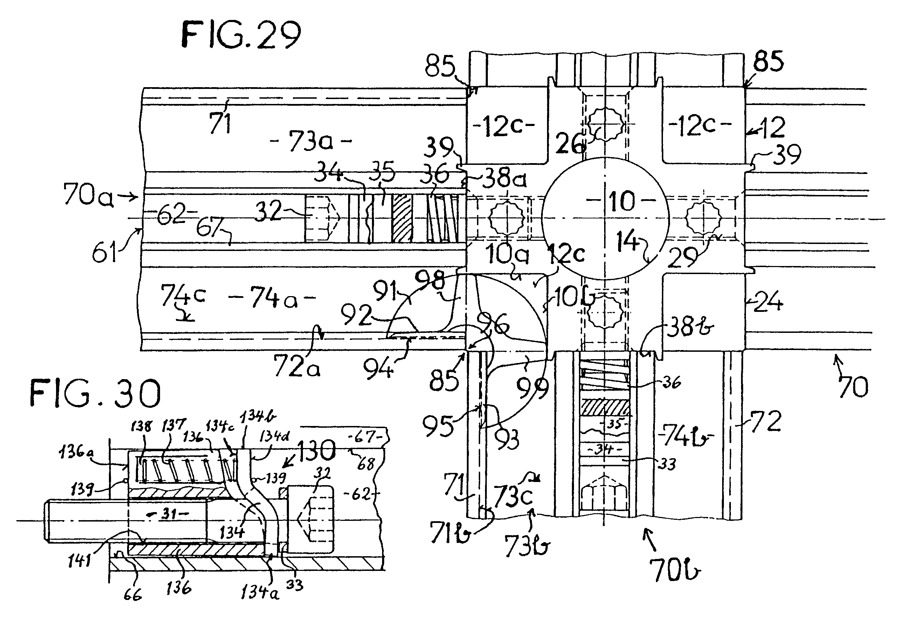

Fig. 29 zeigt, wie die Abdichtung zwischen den beiden in Fig. 24 mit 70a und 70b bezeichneten, unter einem rechten Winkel zueinander an die Anschlußseiten 38a und 38b des Montageknotens 10 angeschlossenen Profile zwischen sich eine Verbindungsfuge 85 freilassen, die ebenso an den anderen drei Ecken des Montageknotens 10 auftritt.

Diese Fugen 85 werden mittels der Eckdichtungen 90 verschlossen, wie dies in Fig. 29 für eine der Fugen gezeigt ist. Die Eckdichtung wird so in die Kammern 74a und 73b der Profile 70a und 70b eingeführt, daß die Rippen 94 des Wandteils 92 der Dichtung 90 dichtend gegen die Innenseitenwandung 72a der Kammer 74a des Profils 70a und die Rippen 95 auf dem Wandteil 93 dichtend gegen die Innenseitenwandung 71b der Seitenkammer 73b des Profils 70b gedrückt werden, indem der Fußteil 91 der Eckdichtung 90 mit den Umfangsflächen seiner Anschlagverstärkungsrippen 98 und 99 gegen die seitlichen Armflächen 10a bzw. 10b des Montageknotens 10 gedrückt wird, wodurch die Längsrippen 94 und 95 gegen die Innenseitenwandungen 72a bzw. 71b dichtend angepreßt werden. Dabei wird die Eckdichtung 90 so tief in die Kammern 74a und 73b hineingedrückt, daß ihr Fußteil 91 mit seinen Ringrippen 97 dichtend auf den Boden 73c der Kammer 73b und den Boden 74c der Kammer 74a sowie auf den sich zwischen diesen Böden auf gleichem Niveau erstreckenden Dichtungsoberflächeneckbereich 12c des Dichtungsformteils 12 gedrückt wird und die Eckdichtung 90 mit ihrer oberen Kante 90a unter den einwärts vorspringenden Flansch 86 der Kammer 73 bzw. 87 der Kammer 74 (Fig. 22) zu liegen kommt, so daß sie mit dichtender Vorspannung ihr Fußteil 91 auf die obengenannten Bodenflächen bleibend andrückt.

Die Nase 96 des Fußteils 91 wird dabei mit ihren Flanken gegen die Stirnenden der benachbarten Profilwände 72 der Profile 70a und 70b gestellt.

Wichtig ist in diesem Falle, wie auch allgemein, daß jeder Oberflächenbereich 12c des Dichtungsformteils 12 mit den beiden an diesen Bereich 12c rechtwinklig zueinander anstoßenden Oberflächen der Schultern 58 bzw. den entsprechend anstoßenden Bodeninnenflächen 73c,74c der Seitenkammern 73,74 (Fig. 22) oder mit einer Schulter 58 und einer Bodeninnenfläche 83c der Seitenkammer 83 (Fig. 23) möglichst genau fluchtet, um Undichtigkeiten zu vermeiden, die bei Abstufungen zwischen den erwähnten Oberflächen auftreten könnten.

Das Fluchten der vorgenannten Bodenflächen miteinander wird auch dadurch sichergestellt, daß beim Einschieben der Leisten oder Rippen 39 von oben her in die Profile (60,70,80) die unteren Leistenenden, die entsprechend genau fluchtend mit den Eckoberflächenbereichen 12c gearbeitet sein müssen, auf die Schultern 58 bzw. Bodenoberflächen 73c,74c aufsetzen.

In Fig. 30 wird schließlich eine vereinfachte Ausführungsform 130 des in Fig. 10 gezeigten Verbindungsorgans 30 dargestellt. Der gleiche Bolzen 31 mit Kopf 32 und Unterlegscheibe 33 trägt hier an Stelle des Kippsteins 35 und der Blattfeder 34 ein Kipporgan 134, dessen Längsschnitt einem S mit abgeflachten Enden entspricht und das in derselben Weise auf dem Bolzen 31 sitzt wie die Feder 34 in Fig. 10. Das untere Ende 134a dieses Kipporgans 134 liegt auf dem Boden 66 der Kammer zwischen der Unterlegscheibe 33 des Bolzenkopfs 32 und einem Gegenlagerglied 136, z.B. aus Stahl, durch dessen Durchlaß 141 sich der Bolzen 31 nach rückwärts in den Montageknoten 10 erstreckt, wie dies auch in Fig. 10 der Fall ist.

Beim Einschieben des noch nicht oder bereits mit dem Montageknoten 10 verbundenen Bolzens 31 mit den beiden auf ihn sitzenden Teilen von der Schnittfläche 59 des Profils 60 her in das letztere hinein, stellt sich das Kipporgan 134 dank der Reibung seines oberen Endes 134b an den Schultern 68 der Profilkammer 62 schräg nach rückwärts, d.h. mit seinem Ende 134b zum Montageknoten hin geneigt und läßt sich so bis zu einer gewünschten Stellung in die Profilkammer 62 einschieben, wobei der Bolzen natürlich nur soweit eingeschraubt sein darf,daß er ein entsprechendes Spiel des Kipporgans 134 gestattet.

Dieses Rückwärtskippen des Kipporgans 134 geschieht gegen die Kraft einer Druckfeder 137, die mit ihrem einen Ende am Boden einer axialen Bohrung 138 des Gegenlagerglieds 136 und mit ihrem anderen, äußeren Ende an der Rückseite 134c des Kipporgans 134 abgestützt ist und das obere Ende des letzteren in axialer Richtung vom Montageknoten 10 weg zum Bolzenkopf 32 hin belastet. Damit die Druckfeder 137 nicht beim Kippen des Kipporgans 134 das Gegenlagerglied 136 vom Kipporgan wegschieben kann, werden beide Teile durch eine Spannklammer 139 zusammengehalten, die an der hinteren Endfläche 136a des Gegenlagerglieds 136 einerseits und an der Vorderseite 134d des Kipporgans 134 andererseits angreift. Wird nun ein stärkeres Verspannen des Verbindungsorgans 130 durch tieferes Hineinschrauben des Bolzens 131 in die Bohrung 29 des Montageknotens 10 bewirkt, so schiebt die Unterlegscheibe 33 das untere Ende 134a des Kipporgans 134 nach rückwärts, d.h. zum Montageknoten 10 hin,und das Kipporgan 134 schwenkt um das an ihm anliegende Ende der Spannklammer 139 und verklemmt sich mit seinem unteren Ende 134a an der Bodenfläche 66 und mit seinem oberen Ende 134b an den beiden Schultern 68 rechts und links des Längsschlitzes 61 des Profils 60. An seiner oberen Endfläche 134b kann das Kipporgan 134 auch eine kleine Führungsnase (nicht gezeigten aufweisen, die in den Längsschlitz 61 zwecks besserer Führung hineinragt.

Ein teilweises Herausschrauben des Bolzens 31 aus der Bohrung 29 lockert die Verklemmung, das Kipporgan 134 kann wieder mit seinem oberen Ende 134a schräg nach rückwärts kippen und läßt sich tiefer in die Kammer 62 des Profils 60 hineinschieben. Soll das gesamte Verbindungsorgan 130 aus dem aus dem Gitterwerk herausgenommenen Profil entfernt werden, so wird das Kipporgan 134 durch Druck mit dem Finger oder mit einem Schraubenzieher oder dergl. auf den oberen Bereich der Vorderseite 134d wieder rückwärts gekippt und die ganze Einheit aus dem Profil 60 hinausgeschoben.

Dank der einfachen Art der dichten Verbindung zwischen Montageknoten und Profilen nach der Erfindung kann die Montage des Gitterwerks von seiner Oberseite her an Ort und Stelle erfolgen, ohne daß es einer besonderen Werkstatt bedarf. Ein Schneidinstrument (Kreissäge) zum Abschneiden von Profilen gewünschter Länge, ein Innensechskant-Kugelkopfschlüssel, gegebenenfalls ein Schraubenzieher, sind alles, was zur Montage benötigt wird.

## Ansprüche

1. Montageknoteneinheit für eine Gitterwerkdecke, insbesondere für eine Reinraum-Gitterwerkdecke, mit

einem Montageknoten (10,40,50) mit mehreren Anschlussflächen (38), die je eine Ausnehmung (29) enthalten und denen je über diese Anschlussfläche vorstehende Eingriffsmittel (39) zugeordnet sind,

mit ihren Längsachsen in einer gemeinsamen Ebene liegenden, durch Schnittflächen (59,75) begrenzten, mindestens mit einer oberen Längsöffnung (61) versehenen Profilabschnitten (60,70,80) mit einer Profilkammer (62) und Stegen (69), welch letztere mit den Eingriffsmitteln zusammenwirken,

Verbindungsmitteln (30,31), die je in eine der Ausnehmungen und die Profilkammer eingreifen und den entsprechenden Profilabschnitt mit einer seiner Schnittflächen gegen die zugehörige Anschlussfläche verspannen, sowie

Dichtungsmitteln (12) zwischen dem Montageknoten und den Schnittflächen der Profilabschnitte,

dadurch gekennzeichnet, dass

die Eingriffsmittel quer zur gemeinsamen Ebene verlaufende, beidseitig der Ausnehmung (29) angeordnete Führungsrippen (39) sind, deren eine Längsenden einer offenen Seite des Profilabschnittes (60,70,80) zugekehrt sind und dass

die Dichtungsmittel durch einen am Montageknoten (10,40, 50) vorgesehenen Dichtungsformteil (12) aus gummielastischem Material gebildet sind, der für jede der Anschlussflächen (38) eine bezüglich dieser vorversetzte, quer vor den Führungsrippen verlaufende Dichtfläche (24) aufweist.

2. Montageknoteneinheit nach Anspruch 1, dadurch gekennzeichnet, dass der Montageknoten (10) einen die Anschlussflächen (38) aufweisenden Oberteil (13) und einen den Dichtungsformteil (12) tragenden Unterteil (11) aufweist und dass jeder Profilabschnitt (60) mit einem Schnittflächenteil, der unterhalb der Profilkammer (62) liegt, mit der entsprechenden Dichtfläche (24) zusammenwirkt.

3. Montageknoteneinheit nach Anspruch 1, dadurch gekennzeichnet, dass der Montageknoten (10) neben einem die Anschlussflächen (38) aufweisenden Oberteil (13) einen den Dichtkörper (12) tragenden Unterteil (11) besitzt.

4. Montageknoteneinheit nach Anspruch 3, bei welchen die Anschlussflächen in vertikalen Ebenen liegen, dadurch gekennzeichnet, dass der Oberteil (13) aus einem vorzugsweise durch Strangpressen hergestellten Profil gebildet ist und der Dichtkörper (12) den am Oberteil befestigten Unterteil (11) umgibt.

## Claims

1. Assembly joint unit for a grid type ceiling, in particular, a grid type clean space ceiling with

    an assembly joint (10, 40, 50) with several connecting faces (38) each comprising a recess (29) and to each of which there are assigned engagement means (39) projecting beyond this connecting face,

    with several profile sections (60, 70, 80) provided with at least one upper longitudinal opening (61) disposed with their longitudinal axes in a common plane delimited by cut surfaces (59, 75) with a profile chamber (62) and webs (69), the latter cooperating with the engagement means,

    connecting means (30, 31), each engaging in one of the recesses and in the profile chamber and bracing the corresponding profile section with one of its cut surfaces against the associated connnecting face, and

    sealing means (12) between the assembly joint and the cut surfaces of the profile sections,

    characterized in that

    the engagement means are guide ribs (39) extending transversely to the common plane arranged on both sides of the recess (29), one longitudinal end whereof facing an open side of the profile section (60, 70, 80) and in that

    the sealing means are formed by a shaped sealing component (12) made of a flexible rubber material provided on the assembly joint (10, 40, 50) and having a sealing surface (24) for each of the connecting faces (38) disposed ahead with respect thereto, extending transversely in front of the guide ribs.

2. An assembly joint unit according to claim 1, characterized in that the assembly joint (10) has a top part (13) provided with the connecting faces (38) and a bottom part (11) carrying the shaped sealing component (12), and in that each profile section (60), having a part of the cut surface disposed beneath the profile chamber (62), cooperates with the corresponding sealing surface (24).

3. An assembly joint unit according to claim 1, characterized in that the assembly joint (10) has, apart from the top part (13) having the connecting faces (38), a bottom part (13) carrying the sealing component (12).

4. An assembly joint unit according to claim 3, wherein the connecting faces are disposed in vertical planes, characterized in that the upper part (13) is formed by a section preferably produced by extrusion, and in that the sealing component (12) surrounds the bottom part (11) fixed to the upper part.

**Revendications**

1. Ensemble de noeud d'assemblage pour plafond en treillis en particulier pour plafond en treillis de local stérile, comportant un noeud d'assemblage (10, 40, 50) muni de plusieurs surfaces (38) de raccordement, qui contiennent chacune une cavité (29) et à chacune desquelles est affecté un moyen d'accrochage (39) faisant saillie au-dessus de cette surface de raccordement, comportant des segments (60, 70, 80) de profilé disposés avec leurs axes longitudinaux dans un plan commun, limités par des surfaces de coupe (59, 75) et munis d'au moins une ouverture longitudinale supérieure (61), dotés d'une chambre (62) de profilé et de parties de liaison (69), ces dernières coopérant avec les moyens d'accrochage,

des moyens de liaison (30, 31) qui pénètrent chacun dans une des cavités et dans la chambre de profilé et qui serrent le segment de profilé avec sa surface de coupe contre la surface de raccordement correspondante,

ainsi que des moyens d'étanchéité (12) entre le noeud d'assemblage et les surfaces de coupe des segments de profilé,

caractérisé par le fait que

les moyens d'accrochage sont des nervures de guidage (39) qui s'étendent transversalement au plan commun et qui sont disposées des deux côtés de la cavité (29), une de leurs extrémités longitudinales étant dirigée vers le côté ouvert du segment de profilé (60, 70, 80) et que

les moyens d'étanchéité sont constitués par une pièce moulée (12) de joint en matériau élastique comme le caoutchouc prévue sur le noeud d'assemblage (10, 40, 50) et qui présente pour chacune des surfaces de raccordement (38) une surface d'étanchéité (24) qui est décalée vers l'avant par rapport à celle-ci et qui s'étend transversalement devant les nervures de guidage.

2. Ensemble de noeud d'assemblage selon la revendication 1, caractérisé par le fait que le noeud d'assemblage (10) présente une pièce supérieure (13) qui comporte les surfaces de raccordement (38) et une pièce inférieure (11) portant la pièce moulée (12) d'étanchéité et que chaque segment (60) de profilé coopère par une partie de surface de coupe qui est située en-dessous de la chambre (62) de profilé, avec la surface d'étanchéité correspondante (24).

3. Ensemble de noeud d'assemblage selon la revendication 1, caractérisé par le fait que le noeud d'assemblage (10) possède, en plus de la pièce supérieure (13) présentant les surfaces de raccordement (38), une pièce inférieure (11) supportant le corps d'étanchéité (12).

4. Ensemble de noeud d'assemblage selon la revendication 3, dans lequel les surfaces de raccordement sont situées dans des plans verticaux, caractérisé par le fait que la pièce supérieure (13) est formée par un profilé fabriqué de préférence au moyen d'une presse à extruder, et que le corps d'étanchéité (12) entoure la pièce inférieure (11) fixée à la pièce supérieure.

FIG.1

FIG.2

# FIG. 3

18

19 -17-

11

-14-

IV

16

18

IV

# FIG. 4

18

18

17

19

11

16

14

18

15

# FIG. 5

FIG. 6

FIG. 7

FIG. 8

FIG. 8A

FIG. 9

FIG.10

FIG.11

FIG.12

FIG.13

FIG.14

FIG.15

FIG.18

FIG.19

FIG.17

FIG.16

# FIG.20

# FIG.21

EP 0 277 330 B1

FIG.24

FIG.23

FIG.22

FIG. 25

XXVII

FIG 26

XXVIII

XXV

XXVI

FIG. 25A

FIG 27

FIG. 28

# FIG.29

# FIG.30